# EUROPEAN PATENT SPECIFICATION

(11) **EP 3 148 820 B1**
(45) Date of publication and mention of the grant of the patent: **28.08.2019**
(21) Application number: 15731708.2
(22) Date of filing: 29.05.2015
(51) Int. Cl.: B60C 9/00, B60C 9/20

(54) **TYRE FOR VEHICLE WHEELS**
REIFEN FÜR FAHRZEUGRÄDER
PNEU POUR ROUES DE VÉHICULE

(30) Priority: 30.05.2014 IT MI20141005
(43) Date of publication of application: 05.04.2017
(73) Proprietor: Pirelli Tyre S.p.A., 20126 Milano (IT)
(72) Inventor: GARRO, Luciano, D-64747 Breuberg (DE); DAGHINI, Guido Luigi, I-20126 Milano (IT); BOLGIAGHI, Davide, D-64747 Breuberg (DE)
(74) Representative: Porta & Consulenti Associati S.p.A.
(86) International application number: PCT/IB2015/054057
(87) International publication number: WO 2015/181787

(56) References cited:
- EP-A1- 2 433 814
- EP-A2- 0 960 749
- JP-A- H0 399 904
- JP-U- H0 719 393
- US-A- 6 098 393
- US-A1- 2012 067 487
- US-A1- 2012 193 006

## Description

The present invention relates to a tyre for vehicle wheels.

Preferably, the tyre of the invention is a HP (High Performance) or UHP (Ultra High Performance) tyre intended to equip vehicles mainly for transporting people of the sedan, minivan, family car, SUV (Sport Utility Vehicle) and/or CUV (Crossover Utility Vehicle) type, typically a tyre that allows travel speeds higher than at least 160 km/h.

The tyre of the invention can be used as a summer tyre, winter tyre or "all season" tyre (that is tyres which can be used all year round).

High and ultra-high performance tyres, which are commonly defined as "HP" or "UHP" tyres are, in particular, those that allow speeds higher 200 km/h up to more than 300 km/h to be reached. Examples of such tyres are those belonging to classes "T", "U", "H", "V", "Z","W", "Y", according to the E.T.R.T.O. - (European Tyre and Rim Technical Organisation) standard and racing tyres, in particular for high-power four-wheeled vehicles. Typically, tyres belonging to such classes have a width whose section is equal to or greater than 185 mm, preferably not greater than 325 mm, more preferably comprised between 195 mm and 325 mm. Such tyres are preferably mounted on rims having fitting diameters equal to or greater than 16 inches, preferably not greater than 24 inches, more preferably comprised between 17 inches and 22 inches. SUV and CUV are used to indicate high-standing vehicles, typically four-wheel drive, having capacity piston displacement equal to or greater than 1800 cc, more preferably comprised between 2000 cc and 6200 cc. Preferably, such vehicles have a mass greater than 1400 Kg, more preferably comprised between 1500 Kg and 3000 Kg.

In the present description and in the subsequent claims, the following definitions apply.

The term "equatorial plane" of the tyre is used to indicate a plane perpendicular to the rotation axis of the tyre and that divides the tyre into two symmetrically equal parts.

The terms "radial" and "axial" and the expressions "radially inner/outer" and "axially inner/outer" are used with reference respectively to a direction perpendicular and a direction parallel to the rotation axis of the tyre. The terms "circumferential" and "circumferentially", on the other hand, are used with reference to the direction of annular extension of the tyre, i.e. to the rolling direction of the tyre, which corresponds to a direction lying on a plane coinciding with or parallel to the equatorial plane of the tyre.

The term "elastomeric material" is used to indicate a composition comprising at least one elastomeric polymer and at least one reinforcing filler. Preferably, such a composition also comprises additive like, for example, a cross-linking agent and/or a plasticizer. Thanks to the presence of the cross-linking agent, such a material can be cross-linked through heating.

The term "cord", or the expressions "reinforcing cord" or "reinforcing element" are used to indicate an element consisting of one or more thread-like elements (hereafter also called "wires") coated with, or embedded in, a matrix of elastomeric material. Depending on the circumstances and on the specific applications, the aforementioned thread-like elements can be made from textile and/or metallic material.

The term "diameter" or "thickness" of a cord or of a wire is used to indicate the thickness of the cord or of the wire measured as prescribed by method BISFA E10 (The International Bureau For The Standardization Of Man-Made Fibres, Internationally Agreed Methods For Testing Steel Tyre Cords, 1995 edition).

The area of the section of a cord is calculated geometrically by multiplying the number of wires which the area consists of by the geometric section of each wire, for example in the case of identical wires A= n_{wires}^{∗}d^{2∗}π/4 wherein A is the area of the section of the cord, n_{wires} is the number of wires which the area consists of, d is the diameter of the wire and π is the Greek P constant.

The expression "elongation at break" of a reinforcing cord is used to indicate the percentage elongations at which breaking occurs, evaluated with the method BISFA E6 (The International Bureau For The Standardization Of Man-Made Fibres, Internationally Agreed Methods For Testing Steel Tyre Cords, 1995 edition).

The expression "break energy" of a reinforcing cord is used to indicate the energy necessary to make the reinforcing cord break, evaluated by calculating the area subtended by the traction curve through the incremental ratio method obtained with the method BISFA E6 (The International Bureau For The Standardization Of Man-Made Fibres, Internationally Agreed Methods For Testing Steel Tyre Cords, 1995 edition).

The expression "Taber Stiffness" is used to indicate the stiffness defined as bending moment and evaluated through a Taber testing device according to the standard BISFA E8 (The International Bureau For The Standardization Of Man-Made Fibres, Internationally Agreed Methods For Testing Steel Tyre Cords, 1995 edition). The unit of measurement of such stiffness is indicated with "TSU" (Taber Stiffness Unit).

The expression "Plunger test" is used to indicate a strength test of the tyre carried out through compression of a slow-moving plunger until the tyre breaks. In the present case, the test was carried out according to the method FMV SS 139 (National highway traffic safety administration, department of transportation. Part 571 - Federal Motor Vehicle Safety Standards: Subpart B).

The expression "rolling resistance" is used to indicate a force that opposes the rolling of a tyre and in more general terms the energy consumed by the tyre when rolling per unit of distance travelled. The measurement of the rolling resistance can be carried out according to the standard ISO28580.

A tyre for vehicle wheels typically comprises a carcass structure, a belt structure arranged in radially outer position with respect to the carcass structure and a tread band arranged in radially outer position with respect to the belt structure and through which the contact of the tyre with the road surface takes place.

Both the carcass structure and the belt structure typically comprise a plurality of reinforcing cords, made from textile or metallic material, embedded in a matrix of elastomeric material.

Reinforcing cords can be used in other components of the tyre, like for example in the bead structure (both as an annular anchoring element and as a lateral reinforcing layer or reinforcing layer surrounding the bead itself) and, in the
specific case of use on heavy load vehicles, in stone-guard layers and/or side reinforcing layers of the belt structure.

EP 0 237 462, US 6,293,326, US 6,273,160, US 6,146,760, US 5,888,321, US 2012/193006, JP H03 99904, JP H07 19393, US 2012/067487, EP 2433814, US 6,098,393 and Unitary States Statutory Invention Registration n. H1333 describe various constructions of reinforcing cords which can be used in tyres for vehicle wheels.

### SUMMARY OF THE INVENTION

In the belt structure of the HP and UHP tyres, the Applicant has for long time used reinforcing cords comprising steel wires.

The wires of the metal cords used in the reinforcing elements are preferably made of NT (normal tensile), HT (high tensile), ST (super tensile) or UT (ultra tensile) steel. Typically, such steel wires have a carbon content lower than about 1%. Preferably, the carbon content is greater than or equal to about 0.7%, even more preferably the carbon content is comprised between about 0.7% and about 0.9%. The wires are typically coated with brass or other corrosion-resistant coating (for example Zn/Mn).

By NT "Normal Tensile Steel" wire a carbon steel wire having an ultimate tensile strength of about 2800 ± 200 MPa, for example having an ultimate tensile strength of at least about 2700 MPa for a wire diameter of 0.28 mm is meant.

By HT "High Tensile Steel" wire a carbon steel wire having an ultimate tensile strength of about 3200 ± 200 MPa, for example an ultimate tensile strength of at least about 3100 MPa for a wire diameter of 0.28 mm is meant.

By ST "Super Tensile Steel" wire a carbon steel wire having an ultimate tensile strength of about 3500 ± 200 MPa, for example an ultimate tensile strength of at least about 3400 MPa for a wire diameter of 0.28 mm is meant.

By UT "Ultra Tensile Steel" wire a carbon steel wire having an ultimate tensile strength of about 3900 ± 200 MPa, for example an ultimate tensile strength of at least about 3800 MPa for a wire diameter of 0.28 mm is meant.

The tolerances ± 200 MPa are indicated to include, for each class of steel, the minimum and maximum ultimate tensile strength values due to the various wire diameters (the ultimate tensile strength value is typically inversely proportional to the diameter of the wire), for example for wire diameter comprised between about 0.12 mm and about 0.40 mm.

A first type of reinforcing cords used by the Applicant is of the 2+1x0.28 type. Such a reinforcing cord consists of two straight wires made of steel, in particular NT (Normal Tensile) steel with a carbon content equal to about 0.70 % by weight (C70) with a percentage tolerance equal to ± 0.2%-0.3%, on which a further wire is wound, also made from NT steel with carbon content C70, with a winding pitch equal to 16 mm. The wires of this reinforcing cord have a diameter equal to 0.28 mm.

These cords have an area of section equal to about 0.185 mm² and a Taber stiffness of about 35 TSU. Working with density and type of steel it is possible to obtain difference impact resistances. However the Applicant has substantially found that due to their high stiffness such reinforcing cords give the belt structure of the tyre excellent mechanical characteristics, in terms both of integrity and structural strength. They are therefore suitable for making particularly strong belt structures.

The Applicant has, however, found that tyres in which such a type of reinforcing cords are used have rolling resistance and drivability that, in the effort to reduce fuel consumption and to improve driving response and comfort, should be improved.

A second type of reinforcing cords used by the Applicant in its tyres HP and UHP is of the type 3x0.22HT. Such a reinforcing cord consists of three HT (High Tensile) steel wires. The three steel wires are twisted together with a twisting pitch equal to 12.5 mm and all have a diameter equal to 0.22 mm.

The reinforcing cords of the 3x0.22 type are much lighter and thinner than those of the 2+1x0.28 type. They have a section area equal to 0.114 mm² and allow particularly light belt structures to be made. The amount of steel in 3X0.22 cords is much less than that in 2+1x0.28 cords and it is considered appropriate to provide for greater densities and steel of greater strength to approximate the mechanical properties of the latter. The density is typically limited by the minimum space that can be reached between the cords, that must stay at a minimum distance apart in order to avoid fretting phenomena, i.e. wearing by sliding. The belt structures comprising reinforcing cords of the 3x0.22 type have mechanical characteristics, in terms both of integrity and structural strength, that are lower than those of belt structures comprising reinforcing cords of the 2+1x0.28 type.

The Applicant has found that tyres in which reinforcing cords of the 3x0.22HT type are used have a better rolling resistance with respect to those of tyres in which reinforcing cords of the 2+1x0.28 type are used, thanks to the low thicknesses of the fabrics formed with such cords.

The 3x0.22HT cord has a Taber stiffness equal to 15 TSU. According to the Applicant such low stiffness would result in better drivability because it would allow the tread to adapt better to the unevenness of the road and a better comfort because the tyre would tend to absorb the unevenness.

The Applicant has considered the problem of making HP and UHP tyres having better mechanical characteristics than those of tyres in which reinforcing cords of the 3x0.22 type are used and, at the same time, characteristics of rolling resistance and drivability that are better than those of tyres in which reinforcing cords of the 2+1x0.28 type are used.

EP 0 237 462 describes the use, in the belt structures of tyres, of reinforcing cords of the 2x0.30HT type. Such reinforcing cords are lighter and thinner than those of the 2+1x0.28 type; in particular, their section area is about 0.141 mm² and therefore their weight is intermediate between that of cords of the 3x0.22 type and that of cords of the 2+1x0.28 type. The Applicant has found that, for the same density of the reinforcing elements in the belt layer, the tyres in which reinforcing cords of the 2x0.30HT type are used have lower mechanical characteristics than those of tyres in which reinforcing cords of the 2+1x0.28 type are used. Such tyres, however, have better rolling resistance than that of tyres in which reinforcing cords of the 2+1x0.28 type are used and comparable properties of drivability and comfort. The Taber stiffness measured on these cords is equal to 30 TSU.

Achieving mechanical characteristics which are better than those of tyres in which reinforcing cords of the 3x0.22 type are used and, at the same time, characteristics of rolling resistance and drivability which are better than those of tyres in which reinforcing cords of the 2+1x0.28 type are used, seemed to be an irresolvable task due to the contrasting effects to be obtained with the reinforcing cord.

The Applicant has attempted to use a reinforcing cord of the 2x0.28 type, i.e. consisting of two steel wires each having a diameter of 0.28 mm.

Such a cord has a section area equal to 0.123 mm², thus slightly greater than the 3x0.22 cord. In the Applicant's intentions such a cord could have allowed, if used at equivalent densities, a compactness of the belts such as to be able to reproduce the rolling resistance values of a tyre equipped with belts including 3x0.22 cords. However, it was expected that the greater stiffness (Taber stiffness equal to 24 TSU) than that of the reinforcing cord of the 3x0.22 type, due to the greater diameter of steel wires, would have led to performance in terms of drivability and comfort lower than those of tyres equipped with belts comprising reinforcing cords of the 3x0.22 type.

Surprisingly, the Applicant has however found, by making a comparison with cords of the 2+1x0.28 type, that the reduction in rolling resistance given to the tyres by the reinforcing cords of the 2x0.28 type is much more substantial than that given by the reinforcing cords of the 2x0.30 type versus only a limited reduction in weight of the reinforcing cords of the 2x0.28 type with respect to the reinforcing cords of the 2x0.30 type, when on the other hand it would have been expected to obtain a substantially identical or only slightly better result.

Even more surprisingly, the Applicant has found that, although the reinforcing cords of the 2x0.28 type have a greater weight than the reinforcing cords of the 3x0.22 type, they allow better rolling resistance and drivability than that achieved using the reinforcing cords of the 3x0.22 type, when on the other hand it would have been expected to obtain an opposite result.

According to the Applicant the surprising results obtained using the 2x0.28 reinforcing cord highlight how in reality rolling resistance and drivability are also influenced by factors or parameters other than the weight and thickness of the reinforcing cords.

Without being bound to any interpretative theory, the Applicant believes that the behaviour of the tyre in terms of rolling resistance and drivability is at least partially governed by the flexibility and/or stiffness of the particular reinforcing cord being used. The Applicant has indeed found that the reinforcing cord of the 2x0.28 type has intermediate stiffness values between those of reinforcing cords of the 2+1x0.28 (which are also similar for 2x0.30) and 3x0.22 type. According to the Applicant, this parameter would influence the rolling resistance, the drivability and the comfort of a tyre, together with other factors such as the thickness of the cord and the specific strength thereof which determine the amount of steel and rubber used in the structure of the tyre, in a way that is not predictable by the linear extrapolation of such characteristics.

The Applicant has therefore surprisingly found that there are ranges of thickness and stiffness of the cords that allow achieving the best performance of the tyre, in terms of weight, rolling resistance, drivability and mechanical strength and resistance to penetration.

The present invention therefore relates to a tyre for vehicle wheels, comprising a belt structure comprising at least one reinforcing layer consisting of a plurality of reinforcing cords, wherein each reinforcing cord of said plurality of reinforcing cords has an overall section area comprised between 0.110 mm² and 0.135 mm² and a Taber stiffness comprised between 20 and 28 TSU.

Preferably, each reinforcing cord of said plurality of reinforcing cords consists of two metal wires.

Preferably, each of said metal wires has a diameter greater than, or equal to, about 0.27 mm.

In preferred embodiments, each of said metal wires has a diameter comprised between about 0.27 mm and about 0.29 mm, including extremes.

Preferably, the diameter of a first metal wire of said two metal wires is lower than, or equal to, about 0.29 mm.

More preferably, the diameter of said first metal wire is equal to about 0.28 mm.

Preferably, the diameter of a second metal wire of said two metal wires is lower than, or equal to, about 0.29 mm.

More preferably, the diameter of said second metal wire is equal to about 0.28 mm.

Preferably, said at least one belt layer comprises a number of said reinforcing cords greater than, or equal to, about 85, more preferably greater than, or equal to, about 100, even more preferably greater than, or equal to, about 105.

Preferably, said at least one belt layer comprises a number of said reinforcing cords lower than, or equal to, about 130, more preferably lower than, or equal to, about 120, even more preferably lower than, or equal to, about 115.

In preferred embodiments, said number is comprised between about 85 and about 130, preferably between about 100 and about 120, even more preferably between about 105 and about 115, including extremes.

For example, said number is equal to about 110.

Preferably, said reinforcing cords are inclined by a predetermined angle of inclination with respect to a substantially circumferential direction of the tyre.

Preferably, said angle of inclination is greater than, or equal to, about 15°, more preferably greater than, or equal to, about 20°, even more preferably greater than, or equal to, about 23°.

Preferably, said angle of inclination is lower than, or equal to, about 45°, more preferably lower than, or equal to, about 40°, even more preferably lower than, or equal to, about 35°.

In preferred embodiments, said angle of inclination is comprised between about 15° and about 45°, more preferably between about 20° and about 40°, even more preferably between about 23° and about 35°, including extremes.

For example, said angle of inclination can be equal to about 27°.

In preferred embodiments, said two metal wires are twisted with a predetermined twisting pitch.

Preferably, said twisting pitch is greater than, or equal to, about 10 mm, more preferably greater than, or equal to, about 12.5 mm, even more preferably greater than, or equal to, about 14 mm.

Preferably, said twisting pitch is lower than, or equal to, about 20 mm, more preferably lower than, or equal to, about 18 mm.

For example, said twisting pitch is equal to about 16 mm.

Preferably, said metal wires are made of steel selected among NT (normal tensile) or HT (high tensile), or ST (super tensile) or UT (ultra tensile).

Even more preferably said metal wires are made of HT (high tensile) or ST (super tensile) steel.

Further characteristics and advantages of the tyre of the present invention will become clearer from the following detailed description of preferred embodiments thereof, made with reference to the attached drawings. In such drawings:
- figure 1 is a schematic partial semi-cross section view of a portion of a tyre according to an embodiment of the present invention;
- figure 2 is a perspective view of a length of a reinforcing cord used in the belt structure of the tyre of figure 1;
- figure 3 is a load-elongation diagram of an embodiment of the reinforcing cord of figure 2 and of two reinforcing cords used in respective known tyres produced by the Applicant.

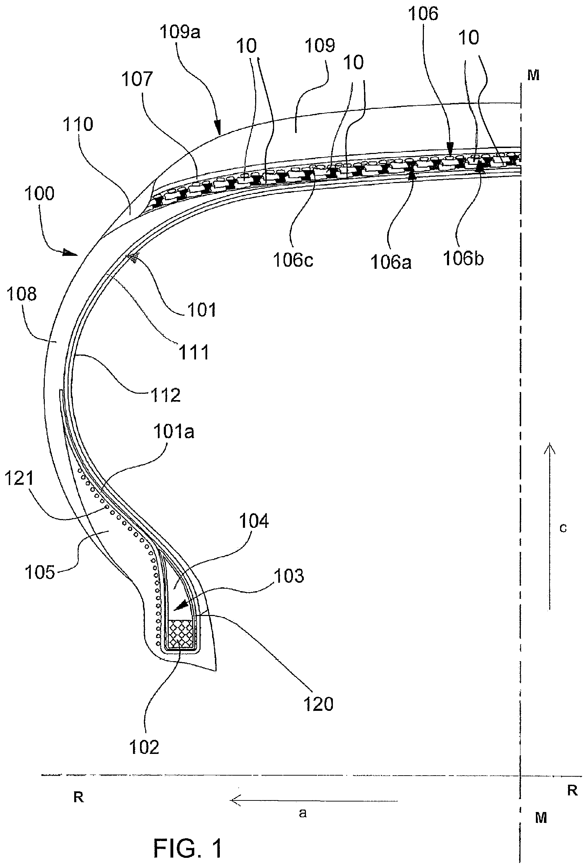

For the sake of simplicity, figure 1 shows only a part of an embodiment of a tyre 100 in accordance with the present invention, the remaining part, which is not shown, being substantially identical and being arranged symmetrically with respect to the equatorial plane M-M of the tyre.

The tyre 100 of figure 1 is, in particular, an embodiment of a tyre for four-wheeled vehicles.

Preferably, the tyre 100 is a HP or UHP tyre.

In figure 1 "a" indicates an axial direction, "c" indicates a radial direction, "M-M" indicates the equatorial plane of the tyre 100 and "R-R" indicates the rotation axis of the tyre 100.

The tyre 100 comprises at least one carcass structure 101, in turn comprising at least one carcass layer 111.

Hereafter, for the sake of simplicity of explanation, reference will be made to an embodiment of the tyre 100 comprising a single carcass layer 111. However, it should be understood that what is described has analogous application in tyres comprising more than one carcass layer.

The carcass layer 111 has axially opposite end edges engaged with respective annular anchoring structures 102, called bead cores, possibly associated with an elastomeric filler 104. The area of the tyre comprising the bead core 102 and the elastomeric filler 104 forms an annular reinforcing structure 103 called "bead" and intended to allow the anchoring of the tyre 100 on a corresponding mounting rim, not shown.

The carcass layer 111 comprises a plurality of reinforcing elements (not shown) coated with elastomeric material or incorporated in a matrix of cross-linked elastomeric material.

The carcass structure 101 is of the radial type, i.e. the reinforcing elements of the carcass layer 101 are arranged on planes comprising the rotation axis R-R of the tyre 100 and substantially perpendicular to the equatorial plane M-M of the tyre 100. Said reinforcing elements generally consist of textile cords, for example made from rayon, nylon, polyester, polyethylene naphthalate (PEN), but this does not exclude the possibility for them to be made of metal cords.

Each annular reinforcing structure 103 is associated with the carcass structure 101 by folding back (or turning) opposite side edges of the at least one carcass layer 111 around the bead core 102, so as to form the so-called turn up 101a of the carcass structure 101.

In an embodiment, the coupling between carcass structure 101 and annular reinforcing structure 103 can be made through a second carcass layer (not shown in figure 1) applied in an axially outer position with respect to the carcass layer 111.

An anti-abrasion layer 105 is arranged so as to surround the annular reinforcing structure 103 along the axially inner and outer areas and the radially inner and outer areas of the annular reinforcing structure 103, thus being arranged between the latter and the rim of the wheel when the tyre 100 is mounted on the rim. Such an anti-abrasion layer 105 may, however, not be provided.

A belt structure 106 is associated in a radially outer position with respect to the carcass structure 101. The belt structure 106 comprises one or more belt layers 106a, 106b, which are arranged radially overlapping each other.

The layers 106a, 106b comprise a plurality of reinforcing cords 10. Such reinforcing cords 10 preferably have a crossed orientation with respect to the circumferential direction of the tyre 100.

In a radially outer position with respect to the belt layers 106a, 106b it is possible to apply at least one zero degrees reinforcing layer 106c, commonly known as "zero degrees belt". Such a layer generally incorporates a plurality of reinforcing cords oriented in a substantially circumferential direction. Such cords thus form an angle of a few degrees (typically lower than about 10°, for example comprised between about 0° and 6°) with respect to the equatorial plane M-M of the tyre 100.

The reinforcing cords 10 and the reinforcing cords of the zero degrees belt layer are coated with an elastomeric material or incorporated in a matrix of cross-linked elastomeric material.

A tread band 109 made of elastomeric material, like other semi-finished products constituting the tyre 100, is/are applied in a radially outer position with respect to the belt structure 106.

Respective sidewalls 108 made of elastomeric material are also applied on the side surfaces of the carcass structure 101, in an axially outer position with respect to the carcass structure 101 itself. Each sidewall 108 extends from one of the side edges of the tread band 109 up to the respective annular reinforcing structure 103.

The anti-abrasion layer 105, if provided, extends at least up to the respective sidewall 108.

In some specific embodiments, like the one illustrated and described here, the stiffness of the sidewall 108 can be improved by providing in the bead of the tyre a reinforcing layer 120 generally known as "flipper" or additional strip-like insert.

The flipper 120 is wound around the respective bead core 102 and the elastomeric filler 104 so as to at least partially surround them. The flipper 120 is arranged between the carcass layer 111 and the annular reinforcing structure 103. Usually, the flipper is in contact with the carcass layer 101 and said annular reinforcing structure 103.

The flipper 120 typically comprises a plurality of metal or textile cords incorporated in a cross-linked elastomeric material.

In some specific embodiments, like the one illustrated and described here, the bead 103 can also comprise a further protective layer 121 that is generally known by the term "chafer", or protective layer, which has the function of increasing the rigidity and integrity of the annular reinforcing structure 103.

The chafer 121 usually comprises a plurality of cords incorporated in un cross-linked elastomeric material; such cords are generally made of textile material (for example aramid or rayon), or metal material (for example steel cords).

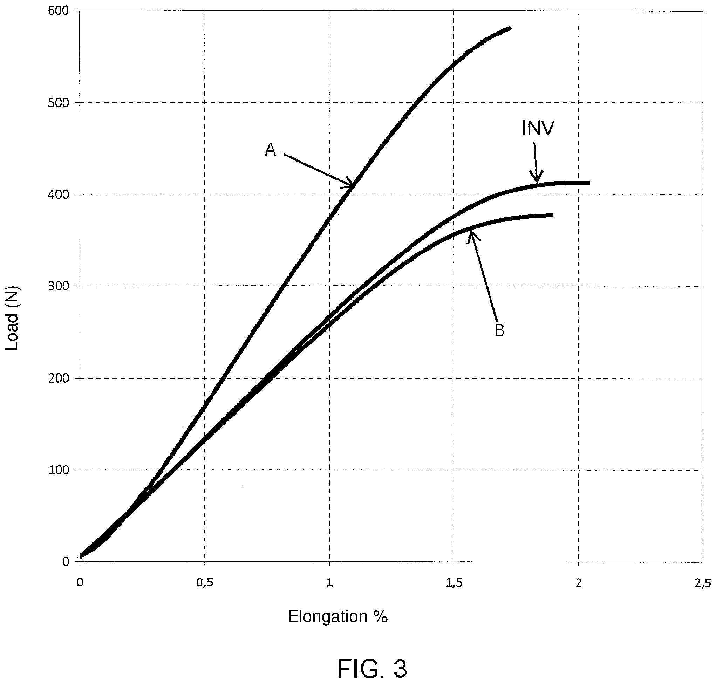

The tread band 109, in a radially outer position thereof, has a rolling surface 109a intended to come into contact with the ground. On the rolling surface 109a circumferential grooves are formed, which are connected by transversal notches (not shown in figure 1) so as to define on the rolling surface 109a a plurality of blocks of various shapes and sizes. For the sake of simplicity, in figure 3 the rolling surface 109a is shown as being slick.

A under-layer 107 is arranged between the belt structure 106 and the tread band 109.

In some specific embodiments, like the one illustrated and described here, a layer consisting of elastomeric material 110, commonly known as "mini-sidewall", can possibly be provided in the connection area between the sidewalls 108 and the tread band 109. The mini-sidewall is generally obtained through co-extrusion with the tread band 109 and allows an improvement of the mechanical interaction between the tread band 109 and the sidewalls 108.

Preferably, an end portion of the sidewall 108 directly covers the side edge of the tread band 109.

In the case of tubeless tyres, a layer of rubber 112, generally known as "liner", can also be provided in a radially inner position with respect to the carcass layer 101 to provide the necessary impermeability to the inflation air of the tyre 100.

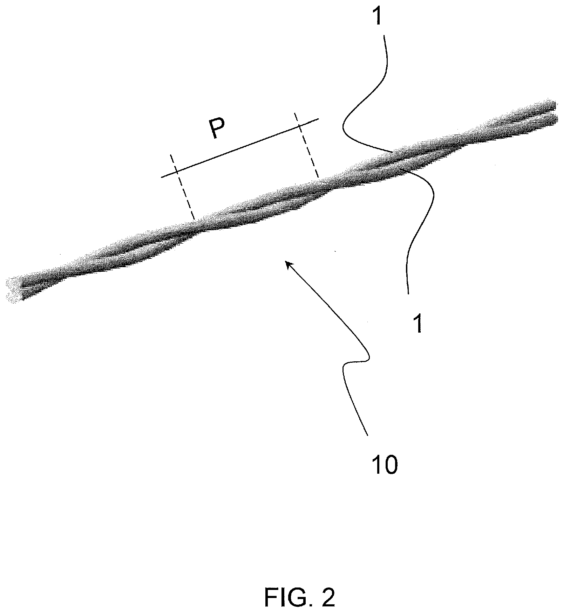

The reinforcing cords of the crossed belt layers 106a, 106b can be made in accordance with the present invention. They can consist of reinforcing cords 10 of the type shown in figure 2.

The cord 10 comprises two metal wires 11. The two wires 11 are preferably identical and therefore the same reference numeral has been used for them.

The wires 11 are preferably twisted together with a twisting pitch P comprised between about 10 mm and about 20 mm, more preferably between about 12.5 mm and about 18 mm, for example equal to about 16 mm.

Each of the wires 11 of the cord 10, in addition to be twisted around the other wire 11, can be individually twisted on itself with a predetermined twisting pitch that may or may not be equal to the twisting pitch P.

The wires 11 preferably have a diameter greater than or equal to about 0.27 mm and lower than 0.30 mm, more preferably lower than, or equal to, about 0.29 mm.

In the preferred embodiment of the present invention the wires 11 have a diameter equal to about 0.28 mm.

The cord 10 of figure 2 therefore has a construction which can be identified as 2X0.28. In accordance with such symbology, indeed, the number before the symbol "X" indicates the number of wires twisted together and the number after the symbol "X" indicates the diameter of such wires.

Similar constructions to that of figure 2 can be made using wires 11 of different diameter or of different material.

The cords 10 preferably have a ultimate tensile strength not lower than about 360N, preferably not lower than about 380 N.

For example, said ultimate tensile strength is equal to about 420 N.

The cords 10 preferably have a percentage elongation at break not lower than about 1.9%.

For example, said elongation at break is equal to about 2%.

The cords 10 have a stiffness TSU (Taber Stiffness Unit) not lower than about 20, preferably not lower than about 22.

Preferably, the stiffness TSU is not greater than 28, more preferably not greater than 26.

For example, said stiffness TSU is equal to about 24.

The cords 10 have an overall section area comprised between 0.110 mm² and 0.135 mm².

In the preferred embodiments of the invention, the cord 10 of figure 2 is used in both the belt layers 106a, 106b. In this case, the cords 10 of each layer 106a, 106b are inclined by a predetermined angle of inclination with respect to the circumferential direction of the tyre 100. Such an angle of inclination is comprised between about 15° and about 45°, preferably between about 20° and about 40°, more preferably between about 23° and about 35°, including extremes. For example, such an angle is equal to about 27°. The angles of inclination of the cords of the two adjacent belt layers 106a, 106b are preferably opposite with respect to the circumferential direction of the tyre 100.

The Applicant has found that when the angle of inclination of the cords 10 is in the aforementioned ranges of values, drivability when cornering (measured for example at 100 Km/h in a bend) and drivability in a straight line (understood as detection of small movements under the imprint area and measured for example at 100 km/h on a straight) are optimised.

Preferably, each belt layer 106a, 106b comprises a number of said cords 10 comprised between about 85 and about 130, preferably between about 100 and about 120, even more preferably between about 105 and about 115, including extremes.

In the preferred embodiments of the invention, said number is equal to about 110.

Each wire 11 is coated with a layer of elastomeric material having a thickness preferably lower than about 1.0 mm, more preferably lower than about 0.97 mm. Preferably, the thickness of said layer is greater than about 0.70 mm, for example equal to about 0.90 mm.

In this way an optimisation between the rubber-coating of the wires 11 and density thereof in the reinforcing layer is obtained.

In a preferred embodiment thereof, the wires 11 are made from steel with high carbon content. In particular, HT or ST steel is used in order to provide the cord with particular resistance to compression, as well as to traction.

The cord 10 of figure 2 can also be applied in embodiments of tyres different from those of figure 1; such a tyre can be a summer tyre or a winter tyre or an all season tyre.

The Applicant subjected to traction the cord 10 described above, made by two ST steel wires of equal diameter of 0.28 mm (hereafter also indicated as "INV cord") according to the aforementioned international method BISFA E6 and compared the behaviour of such a cord with that of the aforementioned cords of the 2+1x0.28NT type (hereafter also indicated as "cord A") and of the 3x0.22HT type (hereafter also indicated as "cord B").

The test was carried out by locking the samples at the ends thereof between pliers, providing a pre-load of 5N and then applying a separation speed of the calipers of 100 mm/min until the sample breaks.

In the cord A the steel wire that is helically wound has a left-handed winding pitch equal to 16 mm.

In the cord B the three steel wires are twisted together with left-handed twisting pitch equal to 12.5 mm.

In the cord INV the two steel wires are twisted together with left-handed twisting pitch equal to 16 mm.

Table 1 below indicates the mechanical characteristics of the three cords subjected to testing.

**TABLE 1**

| Cord | Cord diameter | Linear density | Ultimate tensile strength | Elongation at break | Break energy | Cord section area | Taber stiffness |
|---|---|---|---|---|---|---|---|
| | [mm] | [kTex] | [N] | [%] | [J] | [mm²] | [TSU] |
| A 2+1x0.28NT | 0.70 ±0.03 | 1.45 ±5% | 530 | 1.80 ±0.15 | 5.319 | 0.185 | 35 |
| B 3x0.22HT | 0.47 ±0.05 | 0.91 ±5% | 360 | 1.90 ±0.10 | 4.292 | 0.114 | 15 |
| INV 2x0.28ST | 0.56 ±0.03 | 0.97 ±5% | 410 | 2 ±0.10 | 5.138 | 0.123 | 24 |

The load-percentage elongation behaviour of the aforementioned cords is illustrated in the graph of figure 3. From such a graph and from table 1 it can be seen that the value of the ultimate tensile strength of the cord INV is comprised between those of the cord A and those of the cord B, and that such a value is closer to that of cord B. The load/elongation curves of the two cord INV and B are also close.

It should also be noted that the elongation at break of the cord INV is greater than that of the cords A and B.

Table 1 also indicates the break energy and the Taber stiffness measured for each of the aforementioned cords.

The cord INV has a breaking behaviour (break energy) close to that of the cord A, which is known to have excellent characteristics of structural strength, whereas the Taber stiffness of the cord INV is at an intermediate value between the cords A and B.

The Applicant has made a reinforcing layer A1 comprising 98 cords A (with thickness of the elastomeric material around each metal wire equal to 0.105 mm), a reinforcing layer B1 comprising 110 cords B (with thickness of the elastomeric material around each metal wire equal to 0.090 mm) and a reinforcing layer INV1 comprising 110 cords INV (with thickness of the elastomeric material around each metal wire equal to 0.090 mm).

Table 2 below indicates the technical characteristics of the aforementioned reinforcing layers.

**TABLE 2**

| Reinforcing layer | Weight of steel per m² of reinforcing layer | Weight of elastomeric material per m² of reinforcing layer | Total weight per m² of reinforcing layer | Space between cords | Space above and below layer |
|---|---|---|---|---|---|
| | [g/m²] | [g/m²] | [g/m²] | [mm] | [mm] |
| A1 | 1430 | 1030 | 2460 | 0.32 | 0.18 |
| B1 | 1010 | 900 | 1910 | 0.44 | 0.22 |
| INV1 | 1070 | 900 | 1970 | 0.35 | 0.17 |

The break energy measured for each of the aforementioned reinforcing layers is indicated in table 3 below:

**TABLE 3**

| Reinforcing layer | Break energy |
|---|---|
| | [J] |
| A1 | 521 |
| B1 | 472 |
| INV1 | 565 |

From table 3 it can be seen that, with particular reference to the break energy, the mechanical behaviour of the reinforcing layer comprising cords INV is even better than that of the reinforcing layer comprising cords A; such behaviour would confirm a better resistance of the tyre to external stresses.

In order to evaluate the behaviour of the tyre 100 of the present invention in terms of rolling resistance, drivability, and resistance to external stresses (Plunger test), the Applicant has carried out a series of comparative tests using tyres comprising in the respective belt structures the reinforcing layer INV1 (such tyres thus corresponding to the tyre 100 of the present invention and are indicated hereafter as "tyres TINV₁,...,TIVNₙ") and known tyres comprising in the belt structures thereof the reinforcing layer A1 (hereafter "tyres TA₁, ... ,TAₙ") and the reinforcing layer B1 (hereafter "tyres TB₁, ... ,TBₙ"), Respectively. The subscript symbol indicates that it concerns a tyre that differs from the others of the same type only in that it has a different size. Otherwise, the aforementioned tyres differ only in the different type of cord used in the respective belt structures.

In all of the tests carried out, the behaviour of the aforementioned tyres was evaluated in terms of rolling resistance, drivability and Plunger test, taking index 100 as reference. An increase with respect to 100 under the entry "Rolling resistance" indicates an advantageous percentage improvement of the rolling resistance, i.e. a percentage reduction in rolling resistance. An increase with respect to 100 under the entry "Drivability" indicates an advantageous percentage improvement of the drivability. An increase with respect to 100 under the entry "Plunger test" indicates an advantageous percentage improvement of the resistance to static compression.

In a first series of tests the tyres TINV₁, TIA₁ and TB₁ all had size 245/45 R19. The tyre TA₁ had a weight of 12.60 kg, the tyre TB₁ a weight of 12.20 kg and the tyre TINV₁ a weight of 12.30 kg.

Table 4 below schematises the results of these tests.

**TABLE 4**

| Tyre | Rolling resistance | Drivability | Plunger test |
|---|---|---|---|
| TA₁ | 98 | 95 | 130 |
| TB₁ | 100 | 100 | 100 |
| TINV₁ | 106.5 | 110 | 120 |

In a second series of tests the tyres TINV₂ and TB₂ were compared. Both tyres had size 225/40 R18. The tyre TB₂ had a weight of 9.87 kg and the tyre TINV₂ a weight of 9.90 kg.

Table 5 below schematises the results of these tests.

**TABLE 5**

| Tyre | Rolling resistance | Drivability | Plunger test |
|---|---|---|---|
| TB₂ | 100 | 100 | 100 |
| TINV₂ | 106.5 | 105 | 111 |

In a third series of tests the tyres TINV₃ and TB₃ were compared. Both tyres TINV₃ and TB₃ had size 275/40 RF19. The tyre TB₃ had a weight of 10.92 kg and the tyre TINV₃ a weight of 10.95 kg.

Table 6 below schematises the results of these tests.

**TABLE 6**

| Tyre | Rolling resistance | Drivability | Plunger test |
|---|---|---|---|
| TB₃ | 100 | 100 | 100 |
| TINV₃ | 103 | 110 | 138 |

In a fourth series of tests the tyres TINV₄ and TB₄ were compared. Both of the tyres TINV₄ and TB₄ had size 205/55 R16 and a weight of 8.25 Kg.

Table 7 below schematises the results of these tests.

**TABLE 7**

| Tyre | Rolling resistance | Drivability | Plunger test |
|---|---|---|---|
| TB₄ | 100 | 100 | 100 |
| TINV₄ | 105 | 105 | 110 |

In a fifth series of tests the tyres TINV₅, TA_{5 and} TB₅ were compared. All of the tyres had size 245/45 R18. The tyre TA₅ had a weight of 12.10 kg, the tyre TB₅ a weight of 11.60 kg and the tyre TINV₅ a weight of 11.70 kg.

Table 8 below schematises the results of these tests.

**TABLE 8**

| Tyre | Rolling resistance | Drivability | Plunger test |
|---|---|---|---|
| TA₅ | 100 | 100 | 100 |
| TB₅ | 104 | 105 | 80 |
| TINV₅ | 108 | 108 | 95 |

All of the tests highlighted that the tyre 100 of the invention, in a surprising way, has a behaviour in terms of rolling resistance and drivability which is better than the already excellent behaviour of tyres comprising cords of the 3x0.22 type. The tests also highlighted that the tyre 100 of the invention has mechanical characteristics, in terms both of integrity and structural strength, that are much better than those of tyres in which reinforcing cords of the 3x0.22 type are used, approaching the optimal behaviour of tyres comprising cords of the 2+1x0.28 type.

The results of the tests carried out by the Applicant thus confirm that with the tyre 100 of the present invention, thanks to the particular construction of the cords used in the belt structure, it is possible to achieve excellent behaviour in terms of rolling resistance and drivability and good behaviour in terms of integrity and structural strength, obtaining a general behaviour which is better than that of the tyres currently used by the Applicant.

The present invention has been described with reference to some preferred embodiments. Various modifications can be brought to the embodiments described above, whilst still remaining within the scope of protection of the invention defined by the following claims.

## Claims

1. Tyre (100) for vehicle wheels, comprising a belt structure comprising at least one reinforcing layer consisting of a plurality of reinforcing cords, wherein each reinforcing cord (10) of said plurality of reinforcing cords comprises two metal wires (11) and has an overall section area comprised between 0.110 mm² and 0.135 mm², **characterised in that** each reinforcing cord (10) has a Taber stiffness comprised between 20 and 28 TSU, wherein the Taber stiffness is evaluated through a Taber testing device according to the standard BISFA E8.

2. Tyre (100) according to claim 1, wherein each reinforcing cord (10) of said plurality of reinforcing cords consists of two metal wires (11) each having a diameter greater than, or equal to, about 0.27 mm and lower than, or equal to, about 0.29 mm.

3. Tyre (100) according to claim 1 or 2, wherein said at least one reinforcing layer comprises a number of said reinforcing cords (10) comprised between about 85 and about 130, preferably between about 100 and about 120, more preferably between about 105 and about 115, including extremes.

4. Tyre (100) according to any one of the previous claims, wherein said at least one reinforcing layer is a crossed belt layer (106a, 106b) of a belt structure (106) of the tyre (100) and wherein said reinforcing cords (10) are inclined by a predetermined angle of inclination with respect to a substantially circumferential direction of the tyre (100).

5. Tyre (100) according to claim 4, wherein said angle of inclination is comprised between about 15° and about 45°, preferably between about 20° and about 40°, more preferably between about 23° and about 35°, including extremes.

6. Tyre (100) according to any one of the previous claims, wherein the diameter of a first metal wire (11) of said two metal wires is lower than, or equal to, about 0.29 mm.

7. Tyre (100) according to claim 6, wherein the diameter of said first metal wire (11) is equal to about 0.28 mm.

8. Tyre (100) according to any one of the previous claims, wherein the diameter of a second metal wire (11) of said two metal wires is lower than, or equal to, about 0.29 mm.

9. Tyre (100) according to claim 8, wherein the diameter of said second metal wire (11) is equal to about 0.28 mm.

10. Tyre (100) according to any one of the previous claims, wherein said two metal wires (11) are twisted with a predetermined twisting pitch (P).

11. Tyre (100) according to claim 10, wherein said twisting pitch (P) is greater than, or equal to, about 10 mm, more preferably greater than, or equal to, about 12.5 mm, even more preferably greater than, or equal to, about 14 mm, even more preferably said stranding pitch (P) is lower than, or equal to, about 20 mm.

12. Tyre (100) according to claim 10 or 11, wherein said twisting pitch (P) is equal to about 16 mm.

13. Tyre (100) according to any one of the previous claims, wherein said metal wires (11) are made of NT or HT or ST or UT steel.

## Patentansprüche

1. Reifen (100) für Fahrzeugräder, umfassend eine Gürtelstruktur umfassend zumindest eine Verstärkungslage, die aus einer Vielzahl von Verstärkungskorden besteht, wobei jeder Verstärkungskord (10) der Vielzahl von Verstärkungskorden zwei Metalldrähte (11) umfasst und eine Gesamtquerschnittsfläche zwischen 0,110 mm² und 0,135 mm² aufweist, **dadurch gekennzeichnet, dass** jeder Verstärkungskord (10) eine Taber-Steifigkeit zwischen 20 und 23 TSU aufweist, wobei die Taber-Steifigkeit mit einem Taber-Prüfgerät gemäß der Norm BISFA E8 bewertet wird.

2. Reifen (100) nach Anspruch 1, wobei jeder Verstärkungskord (10) der Vielzahl von Verstärkungskorden aus zwei Metalldrähten (11) besteht, die jeweils einen Durchmesser größer als oder gleich etwa 0,27 mm und kleiner als oder gleich etwa 0,29 mm aufweisen.

3. Reifen (100) nach Anspruch 1 oder 2, wobei die zumindest eine Verstärkungslage eine Anzahl der Verstärkungskorde (10) zwischen etwa 85 und etwa 130, vorzugsweise zwischen etwa 100 und etwa 120, noch bevorzugter zwischen etwa 105 und etwa 115 umfasst, wobei die Extremwerte eingeschlossen sind.

4. Reifen (100) nach einem der vorhergehenden Ansprüche, wobei die zumindest eine Verstärkungslage eine gekreuzte Gürtellage (106a, 106b) einer Gürtelstruktur (106) des Reifens (100) ist, und wobei die Verstärkungskorde (10) in einem vorbestimmten Schrägwinkel in Bezug auf eine im Wesentlichen umlaufende Richtung des Reifens (100) schräg sind.

5. Reifen (100) nach Anspruch 4, wobei der Schrägwinkel zwischen etwa 15° und etwa 45°, vorzugsweise zwischen etwa 20° und etwa 40°, noch bevorzugter zwischen etwa 23° und etwa 35° beträgt, wobei die Extremwerte eingeschlossen sind.

6. Reifen (100) nach einem der vorhergehenden Ansprüche, wobei der Durchmesser eines ersten Metalldrahts (11) der zwei Metalldrähte kleiner als oder gleich etwa 0,29 mm ist.

7. Reifen (100) nach Anspruch 6, wobei der Durchmesser des ersten Metalldrahts (11) gleich etwa 0,28 mm ist.

8. Reifen (100) nach einem der vorhergehenden Ansprüche, wobei der Durchmesser eines zweiten Metalldrahts (11) der zwei Metalldrähte kleiner als oder gleich etwa 0,29 mm ist.

9. Reifen (100) nach Anspruch 8, wobei der Durchmesser des zweiten Metalldrahts (11) gleich etwa 0,28 mm ist.

10. Reifen (100) nach einem der vorhergehenden Ansprüche, wobei die zwei Metalldrähte (11) mit einem vorbestimmten Verdrillungsabstand (P) verdrillt sind.

11. Reifen (100) nach Anspruch 10, wobei der Verdrillungsabstand (P) größer als oder gleich etwa 10 mm, noch bevorzugter größer als oder gleich etwa 12,5 mm, noch bevorzugter größer als oder gleich etwa 14 mm ist, und der Verseilungsabstand (P) noch bevorzugter kleiner als oder gleich etwa 20 mm ist.

12. Reifen (100) nach Anspruch 10 oder 11, wobei der Verdrillungsabstand (P) gleich etwa 16 mm ist.

13. Reifen (100) nach einem der vorhergehenden Ansprüche, wobei die Metalldrähte (11) aus NT- oder HT- oder ST- oder UT-Stahl bestehen.

## Revendications

1. Pneu (100) pour roues de véhicule, comprenant une structure de ceinture comprenant au moins une couche de renforcement constituée d'une pluralité de câblés de renforcement, dans lequel chaque câblé de renforcement (10) de ladite pluralité de câblés de renforcement comprend deux fils métalliques (11) et présente une aire de section globale comprise entre 0,110 mm² et 0,135 mm², **caractérisé en ce que** chaque câblé de renforcement (10) a une rigidité de Taber comprise entre 20 et 28 TSU, où la rigidité de Taber est évaluée par l'intermédiaire d'un dispositif de test de Taber selon la norme BISFA E8.

2. Pneu (100) selon la revendication 1, dans lequel chaque câblé de renforcement (10) de ladite pluralité de câblés de renforcement est constitué de deux fils métalliques (11) ayant chacun un diamètre supérieur ou égal à environ 0,27 mm et inférieur ou égal à environ 0,29 mm.

3. Pneu (100) selon la revendication 1 ou 2, dans lequel ladite au moins une couche de renforcement comprend un nombre desdits câblés de renforcement (10) compris entre environ 85 et environ 130, de préférence entre environ 100 et environ 120, plus préférablement entre environ 105 et environ 115, y compris les extrêmes.

4. Pneu (100) selon l'une quelconque des revendications précédentes, dans lequel ladite au moins une couche de renforcement est une couche de ceinture croisée (106a, 106b) d'une structure de ceinture (106) du pneu (100) et dans lequel lesdits câblés de renforcement (10) sont inclinés selon un angle d'inclinaison prédéterminé par rapport à une direction essentiellement circonférentielle du pneu (100).

5. Pneu (100) selon la revendication 4, dans lequel ledit angle d'inclinaison est compris entre environ 15° et environ 45°, de préférence entre environ 20° et environ 40°, plus préférablement entre environ 23° et environ 35°, y compris les extrêmes.

6. Pneu (100) selon l'une quelconque des revendications précédentes, dans lequel le diamètre d'un premier fil métallique (11) desdits deux fils métalliques est inférieur ou égal à environ 0,29 mm.

7. Pneu (100) selon la revendication 6, dans lequel le diamètre dudit premier fil métallique (11) est égal à environ 0,28 mm.

8. Pneu (100) selon l'une quelconque des revendications précédentes, dans lequel le diamètre d'un deuxième fil métallique (11) desdits deux fils métalliques est inférieur ou égal à environ 0,29 mm.

9. Pneu (100) selon la revendication 8, dans lequel le diamètre dudit deuxième fil métallique (11) est égal à environ 0,28 mm.

10. Pneu (100) selon l'une quelconque des revendications précédentes, dans lequel lesdits deux fils métalliques (11) sont torsadés avec un pas de torsion prédéterminé (P).

11. Pneu (100) selon la revendication 10, dans lequel ledit pas de torsion (P) est supérieur ou égal à environ 10 mm, plus préférablement supérieur ou égal à environ 12,5 mm, plus préférablement encore supérieur ou égal à environ 14 mm, plus préférablement encore ledit pas de toronnage (P) est inférieur ou égal à environ 20 mm.

12. Pneu (100) selon la revendication 10 ou 11, dans lequel ledit pas de torsion (P) est égal à environ 16 mm.

13. Pneu (100) selon l'une quelconque des revendications précédentes, dans lequel lesdits fils métalliques (11) sont réalisés en acier NT ou HT ou ST ou UT.
